# FASCICULE DE BREVET EUROPEEN

(11) **EP 1 053 209 B1**
(45) Date de publication et mention de la délivrance du brevet: **17.10.2001**
(21) Numéro de dépôt: 99901661.1
(22) Date de dépôt: 29.01.1999
(51) Int. Cl.: C01B 15/029

(54) **PROCEDE DE PREPARATION D'UNE SOLUTION AQUEUSE DE PEROXYDE D'HYDROGENE DIRECTEMENT A PARTIR D'HYDROGENE ET D'OXYGENE ET DISPOSITIF POUR SA MISE EN OEUVRE**
VERFAHREN ZUR HERSTELLUNG EINER WÄSSRIGEN WASSERSTOFFPEROXIDLÖSUNG DIREKT AUS WASSERSTOFF UND SAUERSTOFF SOWIE VORRICHTUNG ZU DESSEN DURCHFÜHRUNG
METHOD FOR PREPARING AN AQUEOUS HYDROGEN PEROXIDE SOLUTION DIRECTLY FROM HYDROGEN AND OXYGEN AND IMPLEMENTING DEVICE

(30) Priorité: 10.02.1998 FR 9801524
(43) Date de publication de la demande: 22.11.2000
(73) Titulaire: Atofina, 92800 Puteaux (FR)
(72) Inventeur: DEVIC, Michel, F-69110 Saint Foy Lès Lyon (FR); DELAIS, Lionel, F-60300 Senlis (FR)
(74) Mandataire: Dang, Doris
(86) Numéro de dépôt international: FR9900186
(87) Numéro de publication internationale: WO9941190

(56) Documents cités:
- WO-A-92/04277
- WO-A-96/05138
- GB-A- 1 490 925
- US-A- 5 169 618

## Description

La présente invention concerne un procédé catalytique ainsi qu'un dispositif pour préparer, en toute sécurité, des solutions aqueuses de peroxyde d'hydrogène à des concentrations élevées directement à partir d'hydrogène et d'oxygène. Plus particulièrement, elle a pour objet un procédé dans lequel l'hydrogène et l'oxygène sont injectés, dans le milieu aqueux, dans des proportions correspondant au domaine d'inflammabilité du mélange hydrogène-oxygène, et sont présents dans des proportions en dehors de la zone d'inflammabilité dans la phase gazeuse continue. L'invention a également pour objet un dispositif pour la mise en oeuvre du procédé.

Le mélange gazeux hydrogène et oxygène est connu pour être inflammable, même explosif, lorsque l'hydrogène est présent à des concentrations molaires comprises entre 4 et 94 % dans des conditions normales de température et de pression, c'est à dire lorsque le rapport des concentrations molaires hydrogène sur oxygène est supérieur à 0,0416. (Encyclopédie des Gaz-Air Liquide, page 909).

Pour éviter tout risque d'explosion ou d'incendie, il est recommandé soit d'opérer avec un rapport hydrogène/oxygène inférieur à la limite inférieure d'inflammabilité, soit d'utiliser un gaz inerte tel que l'azote, l'argon, l'hélium ou le néon (US 4 681 751, US 4 009 252, EP 0 787 681).

Or, pour obtenir des résultats satisfaisants il est nécessaire de travailler avec un rapport hydrogène/oxygène situé dans la zone d'inflammabilité. Ainsi le document US 4 009 252 divulgue un rapport molaire hydrogène/oxygène compris entre 1/20 et 1/1,5 et de préférence compris entre 1/10 et 1/2. De même le document US 4 336 239 nous enseigne d'opérer en présence d'un rapport molaire hydrogène/oxygène inférieur à 0,2 et de préférence compris entre 1/15 et 1/12.

Par synthèse directe d'une solution aqueuse de peroxyde d'hydrogène, on entend désigner la synthèse de peroxyde d'hydrogène, à partir d'hydrogène et d'oxygène, dans un milieu aqueux comprenant un catalyseur.

La synthèse directe d'une solution aqueuse de peroxyde d'hydrogène en continu ou discontinu dans un réacteur agité a fait l'objet de nombreux travaux. Le réacteur comprend en général une zone aqueuse, occupée par la solution de travail et le catalyseur, et une zone, occupée par les gaz, située au dessus de la zone aqueuse. Il est muni d'un système d'agitation permettant à la fois d'agiter la zone aqueuse et de disperser les gaz dans la phase aqueuse. Les réactifs, à savoir l'hydrogène et l'oxygène, ainsi que les gaz inertes sont injectés dans la zone des gaz.

Par solution de travail, on entend désigner le milieu aqueux, comprenant de l'eau, les acides, et éventuellement les inhibiteurs de décomposition ou les stabilisants de peroxyde d'hydrogène, dans lequel se forme le peroxyde d'hydrogène.

Il a été observé que lorsqu'on effectue la synthèse directe d'une solution aqueuse de peroxyde d'hydrogène dans un réacteur agité, comme décrit précédemment, le catalyseur projeté, sous l'effet de l'agitation, sur les parois du réacteur et l'axe de l'agitateur situés dans la zone des gaz, serait en contact direct avec les réactifs. Au cours de la synthèse, les particules de catalyseur dans la zone des gaz se dessèchent et vont provoquer spontanément, l'ignition du mélange gazeux hydrogène-oxygène si la concentration molaire de l'hydrogène est supérieure à 0,04.

C'est pourquoi dans l'exemple 1 du document US 4 279 883, illustrant la synthèse directe en continu d'une solution aqueuse de peroxyde d'hydrogène en réacteur agité, un mélange gazeux d'hydrogène, d'oxygène et d'azote sont introduits en continu dans la zone gazeuse du réacteur de façon à ce que les pressions partielles. d'hydrogène, d'oxygène et d'azote dans les gaz recueillis à la sortie soient maintenues respectivement à 5, 49 et 113 atmosphères, c'est à dire une concentration molaire en hydrogène égale à 3 %. La fabrication industrielle d'une solution aqueuse de peroxyde d'hydrogène, dans les conditions de sécurité selon le document US 4 279 883, est toutefois économiquement rédhibitoire étant donné la faible concentration de la solution aqueuse de peroxyde d'hydrogène obtenue.

Pour être utilisable cette solution aqueuse nécessite une étape supplémentaire de concentration.

La synthèse directe d'une solution aqueuse de peroxyde d'hydrogène peut également être conduite dans un réacteur tubulaire constitué d'un tube de grande longueur (pipeline) rempli de solution de travail dans laquelle le catalyseur est mis en suspension et l'oxygène et l'hydrogène gazeux sont injectés sous forme de petites bulles dans des proportions au dessus de la limite inférieure d'inflammabilité du mélange hydrogène-oxygène (US 5 194 242). La sécurité d'un tel procédé n'est assurée qu'à la condition de maintenir les réactifs gazeux dans le réacteur sous forme de petites bulles. Selon le document US 5 641 467, celles-ci ne peuvent être obtenues qu'avec une grande vitesse de circulation de la solution de travail.

Il a maintenant été trouvé un procédé catalytique et un dispositif permettant de préparer, en toute sécurité et de façon économique, dans un réacteur agité, des solutions aqueuses de peroxyde d'hydrogène à des concentrations élevées directement à partir d'hydrogène et d'oxygène.

Ce procédé est caractérisé en ce que l'on injecte, sous forme de petites bulles, dans la partie inférieure du milieu réactionnel aqueux, rendu acide par l'addition d'un acide minéral et comprenant un catalyseur à l'état dispersé, de l'hydrogène et de l'oxygène avec des débits molaires tels que le rapport de débit molaire d'hydrogène sur celui d'oxygène soit supérieur à 0,0416, et que l'on introduit dans la phase gazeuse continue et/ou dans la partie supérieure du milieu réactionnel aqueux, de l'oxygène en quantité telle que le rapport molaire d'hydrogène sur oxygène dans la phase gazeuse continue soit inférieur à 0,0416.

Par petites bulles, on entend désigner, des bulles dont le diamètre moyen est inférieur à 3 mm.

Les injections d'hydrogène et d'oxygène, sous forme de petites bulles, dans la partie inférieure du milieu réactionnel aqueux sont de préférence situées au fond du réacteur agité et sont de préférence contiguës pour que les bulles d'H₂ et O₂ se mélangent le plus rapidement possible.

Comme acide minéral, on peut citer par exemple l'acide sulfurique et l'acide orthophosphorique.

Le milieu réactionnel aqueux peut contenir, en outre, des stabilisants du peroxyde d'hydrogène, comme par exemple, les phosphonates ou l'étain, et des inhibiteurs de décomposition comme par exemple les halogénures. Le bromure est l'inhibiteur particulièrement préféré et il est avantageusement utilisé en combinaison avec du brome à l'état libre (Br₂).

Selon l'invention, l'oxygène injecté sous forme de petites bulles dans la partie inférieure du milieu réactionnel aqueux, et l'oxygène introduit dans la phase gazeuse continue et/ou dans la partie supérieure du milieu réactionnel aqueux peuvent contenir en outre de l'hydrogène en quantité telle que le rapport de concentrations molaires d'hydrogène sur oxygène soit inférieur à 0,0416.

Selon la présente invention, on peut opérer aussi bien en continu qu'en semi-continu.

L'alimentation en oxygène, sous forme de petites bulles, dans la partie inférieure du milieu réactionnel aqueux peut être assurée en partie ou en totalité par l'effluent gazeux à la sortie du réacteur.

On peut également utiliser l'effluent gazeux à la sortie du réacteur pour alimenter la phase gazeuse continue, et/ou la partie supérieure du milieu réactionnel aqueux. Dans ce cas, la composition de l'effluent gazeux peut être ajustée par ajout d'oxygène et éventuellement par élimination d'hydrogène, de manière à ce que le rapport des concentrations molaires d'hydrogène sur l'oxygène dans la phase gazeuse continue soit inférieur à 0,0416.

Le catalyseur généralement utilisé comprend au moins un élément choisi parmi les métaux du groupe IB et VIII du tableau périodique. Avantageusement l'or, le platine, le palladium, le ruthénium sont choisis. De préférence on utilise le palladium, le platine ou la combinaison palladium-platine ou mieux encore, le palladium ou la combinaison palladium-platine.

Dans le cas d'un catalyseur composite palladium-platine, le platine représente de préférence entre 1 et 50 % du poids total des métaux et mieux encore environ 2 %.

Selon l'invention le catalyseur peut également être supporté. Les supports généralement utilisés sont par exemple la silice, l'alumine, les silice-alumine et le dioxyde de titane.

Le catalyseur supporté ou non supporté est généralement mis en suspension dans le milieu réactionnel aqueux. De préférence on utilise un catalyseur supporté et mieux encore un catalyseur supporté contenant entre 0,2 et 2 % en poids de métal ou métaux par rapport au support.

La température et la pression régnant à l'intérieur du réacteur sont réglées pour optimiser la sélectivité de la réaction par rapport à l'hydrogène et la productivité en peroxyde d'hydrogène.

La température est généralement comprise entre O et 60°C et de préférence comprise entre 5 et 30°C.

La pression régnant à l'intérieur du réacteur est en général au dessus de la pression atmosphérique et de préférence comprise entre 30 et 100 bars et avantageusement comprise entre 40 et 60 bars.

Le rapport des débits molaires hydrogène/oxygène injectés dans la partie inférieure du milieu réactionnel aqueux peut varier dans de larges limites. Il est de préférence compris entre 0,05 et 5 et plus particulièrement entre 0,2 et 1. Un rapport molaire voisin de 0,3 est avantageusement utilisé.

Lorsqu'on opère en semi-continu, la totalité de la solution de travail et tout le catalyseur sont introduits dans le réacteur avant le début de la synthèse directe et l'hydrogène et l'oxygène sont introduits en continu.

On peut également alimenter le réacteur en continu avec la solution de travail à laquelle on a ajouté le catalyseur, et introduire en continu l'hydrogène et l'oxygène. Dans ce cas, la solution contenant le peroxyde d'hydrogène formé est extraite en continu du réacteur.

Le catalyseur est ensuite séparé, par filtration de la solution finale contenant le peroxyde d'hydrogène formé en semi-continu ou de la solution de peroxyde d'hydrogène extraite en continu du réacteur, puis éventuellement réintroduit dans le réacteur.

Lorsque le réacteur est équipé d'un filtre, le catalyseur est maintenu en permanence dans le réacteur et la solution de peroxyde d'hydrogène est extraite et filtrée simultanément.

Un autre objet de l'invention est un dispositif permettant de fabriquer, en toute sécurité et de façon économique, des solutions aqueuses concentrées en peroxyde d'hydrogène directement à partir d'hydrogène et d'oxygène. Ce dispositif, comprenant un réacteur agité alimenté en continu ou discontinu en solution de travail, est caractérisé en ce que le réacteur est muni (i) d'une ou plusieurs arrivée(s) d'hydrogène gazeux, sous forme de petites bulles, dans la partie inférieure du milieu réactionnel aqueux ; (ii) d'une ou plusieurs arrivée(s) d'oxygène gazeux contenant éventuellement de l'hydrogène, sous forme de petites bulles, dans la partie inférieure du milieu réactionnel aqueux, la ou les arrivée(s) d'oxygène dans la phase liquide sont de préférence contiguës à celle(s) de l'hydrogène pour que les bulles d'H₂ et d'O₂ se mélangent rapidement ; (iii) d'un régulateur de pression permettant de maintenir constante la pression régnant à l'intérieur du réacteur en évacuant l'excès des réactifs gazeux non consommés, et (iv) d'une ou plusieurs arrivée(s) d'oxygène gazeux contenant éventuellement de l'hydrogène, dans la phase gazeuse continue et/ou dans la partie supérieure du milieu réactionnel aqueux, asservie(s) par un analyseur du flux gazeux sortant du réacteur de façon à ce que le rapport molaire d'hydrogène sur l'oxygène dans la phase gazeuse continue soit inférieur à 0,0416.

Le réacteur est muni d'une sortie permettant l'extraction de la solution aqueuse de peroxyde d'hydrogène en continu ou semi-continu. Cette sortie est éventuellement équipée d'un filtre permettant de séparer le catalyseur de la solution aqueuse de peroxyde d'hydrogène.

Selon l'invention, le flux gazeux sortant du réacteur peut être réinjecté dans le circuit alimentant la partie inférieure du milieu réactionnel aqueux en oxygène. Ce flux gazeux après éventuel ajustement, de la teneur en hydrogène par ajout d'oxygène et éventuellement par élimination d'hydrogène, par exemple à l'aide de membrane, peut également être réinjecté dans le circuit alimentant la phase gazeuse continue en oxygène et/ou la partie supérieure du milieu réactionnel aqueux. L'hydrogène ainsi séparé peut être réinjecté dans la partie inférieure du milieu réactionnel aqueux.

De préférence au moins une arrivée d'hydrogène et au moins une arrivée d'oxygène, sous forme de petites bulles, dans la partie inférieure du milieu réactionnel aqueux, sont situées au fond du réacteur agité.

Le réacteur peut être un autoclave de forme cylindrique, cylindroconique ou sphérique agité au moyen d'un axe vertical muni d'un ou plusieurs mobiles d'agitation ou bien d'une ou plusieurs turbines.

D'une manière générale, tout réacteur habituellement utilisé lorsqu'un catalyseur en suspension est mis en jeu, et capable d'assurer un bon échange thermique et de maintenir les réactifs gazeux de la réaction sous forme d'un nuage de petites bulles en plus grand nombre possible peut convenir.

L'agitation peut également être assurée par plusieurs mobiles ou turbines indépendantes actionnés chacun par un arbre d'agitation fixé au fond, ou sur le couvercle ou sur les côtés du réacteur. La turbine située dans la partie supérieure du milieu réactionnel aqueux peut être du type "autoaspirante" c'est à dire qu'elle aspire la phase gazeuse continue du réacteur à partir de l'arbre d'agitation qui est creux, puis diffuse cette phase gazeuse dans le milieu réactionnel aqueux, ou de type "flasquée".

L'agitation peut être complétée par les dispositifs habituellement utilisés pour obtenir une bonne efficacité de l'agitation comme par exemple un ou plusieurs contre-pales disposés verticalement et/ou radialement.

On utilise en général des échangeurs thermiques, tels que serpentins tubulaires, faisceaux de tubes verticaux ou bien ensemble de plaques verticales radiales ou bien spirales enroulées, pour assurer la régulation de la température du milieu réactionnel. Ces échangeurs sont de préférence situés à l'intérieur du réacteur. Avantageusement on utilise un faisceau tubulaire vertical ou des spirales enroulées ou un faisceau de plaques verticales disposées radialement.

La température du milieu peut également être régulée en utilisant un réacteur à double enveloppe avec circulation d'eau.

Le réacteur selon l'invention est conçu de manière à ce que si l'agitation est accidentellement arrêtée, toutes les bulles de gaz puissent remonter et atteindre directement la phase gazeuse continue sous la seule action des forces de la gravité. Les différents dispositifs installés à l'intérieur du réacteur pour assurer les échanges thermiques et/ou l'agitation ne doivent pas faire obstacle à la remontée de bulles et provoquer la formation de poches de gaz à l'intérieur du milieu réactionnel aqueux.

Le réacteur peut être constitué de tout matériau compatible avec les réactifs utilisés. On peut par exemple employer les métaux comme les aciers inox type 304L ou 316L ou des alliages Hastelloy ou bien des métaux revêtus de polymères chimiquement résistants comme le PVDF (polyfluorure de vinylidène), le PTFE (polytetrafluoroéthylène), le PFA (copolymère de C₂F₄ et d'ether vinylique perfluoré), ou le FEP (copolymère de C₂F₄ et de C₃F₆).

Les alimentations en oxygène et en hydrogène, sous forme de petites bulles, dans la partie inférieure du milieu réactionnel aqueux peuvent être assurées par des tubes, ou plaques en métal fritté, ou bien différents types de tuyère, permettant d'éjecter du gaz à grande vitesse et provoquer ainsi la formation de multiples petites bulles.

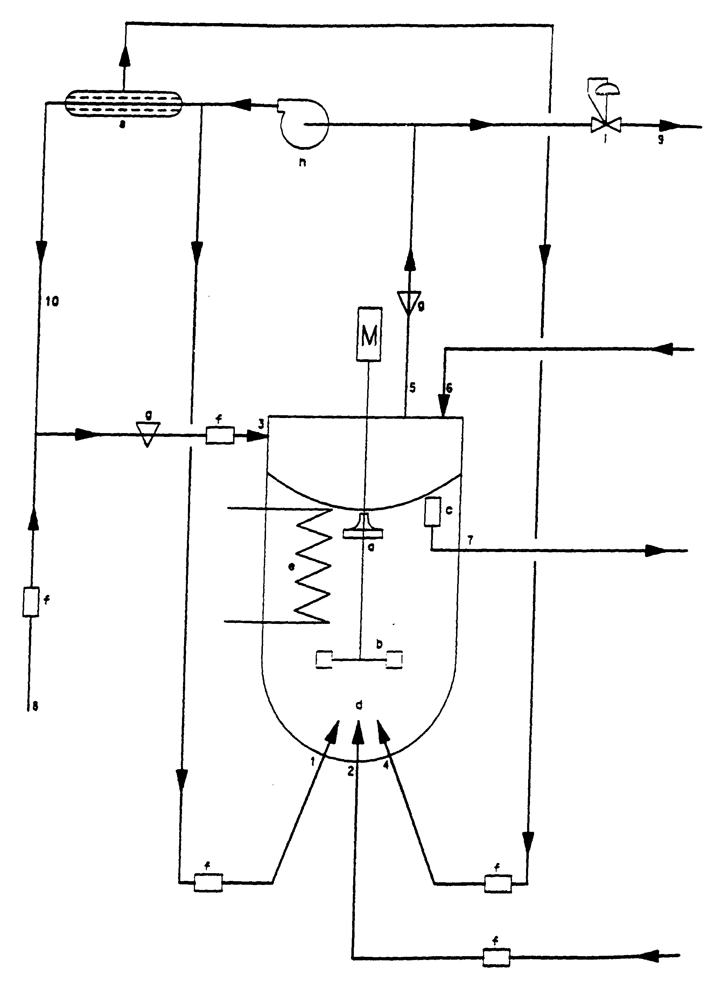

Un dispositif et un schéma de fonctionnement, illustrant un mode de réalisation du procédé de la présente invention, représentés à la Figure unique, sont décrits ci-après.

Le dispositif comprend un réacteur agité au moyen d'un axe vertical muni d'une turbine autoaspirante a et d'une turbine mélangeuse b. Au démarrage : le réacteur contient le catalyseur, mis en suspension dans la solution de travail, l'ensemble étant porté à la température de la réaction,
- l'oxygène introduit dans la phase gazeuse continue en 3 provient du flux 8, c'est à dire de l'oxygène non recyclé, et
- l'hydrogène injecté au fond du réacteur est alimenté par 2.

Un régulateur de pression i permet de maintenir la pression régnant à l'intérieur du réacteur constante, en évacuant l'excès des réactifs gazeux non consommés 9. De même la température du milieu réactionnel est maintenu constante grâce à l'échangeur e.

On introduit en continu dans le réacteur en 6, la solution de travail ; en 2 et 4 de l'hydrogène sous forme de petites bulles ; en 1 de l'oxygène sous forme de petites bulles ; en 3 de l'oxygène en quantité telle que la concentration molaire d'hydrogène dans la phase gazeuse continue soit toujours inférieure à 4 %.

Le système d'alimentation en 3 est asservi par l'analyseur en ligne g, du flux gazeux 5, sortant du réacteur. L'alimentation d'oxygène en 3 est assurée par le flux 8 et par le flux 10, ce dernier provient de l'effluent gazeux à la sortie du réacteur après élimination de l'hydrogène sur membrane s. L'hydrogène ainsi éliminé assure l'alimentation partielle en hydrogène 4 dans la partie inférieure du milieu réactionnel.

L'oxygène 1, injecté dans la partie inférieure du milieu réactionnel provient intégralement de l'effluent gazeux à la sortie du réacteur et contient de l'hydrogène.

Tous les débits de gaz sont régulés à l'aide des débitmètres massiques, f. Les débits d'oxygène et d'hydrogène injectés dans la partie inférieure du milieu réactionnel sont tels que le rapport des débits molaires hydrogène/oxygène soit toujours supérieur à 0,0416.

Les tuyères d'injection d, permettent d'injecter les réactifs sous forme de petites bulles.

Le compresseur h assure le recyclage d'hydrogène et d'oxygène non consommés.

La solution aqueuse contenant le peroxyde d'hydrogène formé est simultanément séparée du catalyseur à l'aide du filtre c et extraite en continu en 7.

D'autres modes de réalisation sont donnés dans les exemples suivants.

### PARTIE EXPERIMENTALE

### Préparation du catalyseur

Le catalyseur utilisé contient 0,8 % en poids de palladium métallique et 0,04 % en poids de platine supportés sur une silice microporeuse. Il est préparé par imprégnation de la silice de la Société Aldrich (réf. 28,851-9) ayant les caractéristiques suivantes :
Taille moyenne des particules = 5 à 15 *µ*m
Surface BET = 500 m²/g
Volume des pores : 0,75 cm³/g
Diamètre moyen des pores : 60Å,
avec une solution aqueuse contenant PdCl₂ et H₂PtCl₆, suivi d'un séchage et enfin d'un traitement thermique sous balayage d'hydrogène à 300°C pendant 3 heures.

### Le réacteur

Le réacteur est un autoclave, à double enveloppe à circulation d'eau, en acier inox d'une capacité 100 cm³ et dont les parois internes sont revêtues de PTFE. Il est muni d'un agitateur à axe vertical avec une turbine à six pales radiales. Le réacteur est également muni de deux entrées en tuyau capillaire de PTFE situées au fond du réacteur et permettant d'injecter l'hydrogène et l'oxygène, sous forme de petites bulles, dans la partie inférieure du milieu réactionnel aqueux. Il est, de plus, équipé d'une entrée située dans le couvercle de l'autoclave et qui permet d'introduire de l'oxygène de façon à ce que le rapport molaire d'hydrogène sur oxygène dans la phase gazeuse continue soit toujours inférieur à 0,0416 c'est à dire en dehors du domaine d'inflammabilité du mélange hydrogène-oxygène.

L'injection des réactifs dans le milieu aqueux ainsi que celle de l'oxygène dans la phase gazeuse continue sont régulées à l'aide des débitmètres massiques.

La pression régnant à l'intérieur du réacteur est maintenue constante grâce à un déverseur. L'hydrogène et l'oxygène constituant le flux gazeux sortant du réacteur sont dosés en ligne par chromatographie en phase gazeuse.

### Préparation d'une solution aqueuse (I)

On prépare une solution aqueuse par ajout de 0,5 g H₃PO₄, 2,5 g H₂SO₄ et 50 mg de bromure de sodium dans 1000 cm³ d'eau distillée et 5 mg de Br₂ sous forme d'eau de brome à 1 %.

### Mode opératoire général

On introduit dans l'autoclave 50 g de la solution aqueuse (I) et 0,3 g de catalyseur puis on porte et on maintient le milieu réactionnel aqueux à la température désirée. On ouvre ensuite l'arrivée d'oxygène dans la phase gazeuse continue. La pression dans l'autoclave augmente jusqu'à la valeur choisie, puis elle est maintenue constante grâce au régulateur de pression.

L'hydrogène et l'oxygène sont ensuite injectés dans le milieu réactionnel aqueux dans les proportions choisies, puis on dose toutes les 10 minutes l'hydrogène du flux gazeux sortant du régulateur de pression.

Après la durée de réaction souhaitée, on coupe l'arrivée d'hydrogène et d'oxygène dans le milieu réactionnel aqueux et on maintient l'injection d'oxygène dans la phase gazeuse continue jusqu'à la disparition totale d'hydrogène dans cette dernière. On coupe alors l'arrivée d'oxygène, puis on décomprime le réacteur et enfin on récupère la solution aqueuse de peroxyde d'hydrogène.

La solution aqueuse de peroxyde d'hydrogène récupérée est ensuite pesée, puis séparée du catalyseur par filtration sur un filtre. La solution résultante est alors dosée par iodométrie, permettant ainsi de déterminer la concentration en peroxyde d'hydrogène.

La consommation d'hydrogène est mesurée par différence entre la quantité injectée et la quantité sortie du réacteur.

La sélectivité de la synthèse directe du peroxyde d'hydrogène par rapport à l'hydrogène est définie comme étant le pourcentage du nombre de moles de peroxyde d'hydrogène formé sur le nombre de moles d'hydrogène consommé.

Les conditions opératoires et les résultats obtenus lors des différents essais (exemples 1 à 10) sont regroupés dans le tableau I.

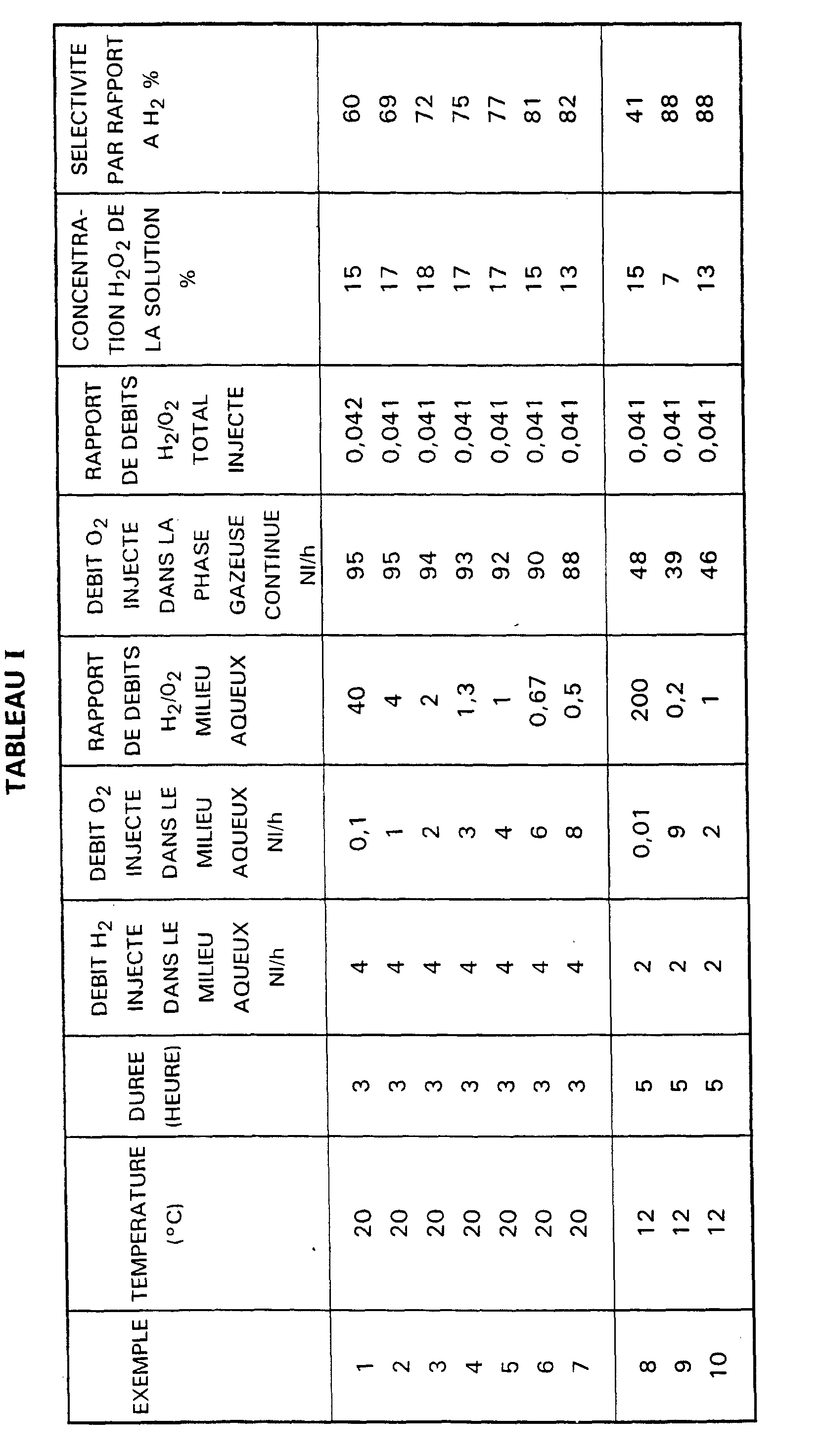

### Exemples 11 à 13

On utiiise un réacteur, en acier inox tytpe 316 L, de forme cylindrique de 98 mm de diamètre intérieur, de 200 mm de hauteur et d'une capacité totale de 1500 cm³. Les parois internes du réacteur sont revêtues d'une couche de PTFE d'un millimètre d'épaisseur.

L'agitation est assurée par un arbre vertical muni d'une turbine flasquée dont l'aspiration est dirigée vers le bas. La turbine flasquée de 45 mm de diamètre, située au milieu du réacteur, est équipée de huit pales.

Une hélice axiale de 30 mm de diamètre, munie de six pales inclinées, est fixée au bout de l'arbre vertical près du fond du réacteur.

Le réacteur est également muni de quatre contrepales verticales et d'un échangeur thermique comptant un faisceau de 8 tubes verticaux dans lesquels circulent de l'eau à 17°C.

L'hydrogène et l'oxygène sont injectés dans la phase liquide à l'aide de deux tuyaux en acier inox, dont les arrivées sont contiguës et situées à proximité de l'hélice axiale.

On reprend le mode opératoire des exemples précédents à ceci près qu'on utilise 700 g de solution aqueuse (I) et 6 g de catalyseur.

Les conditions opératoires et les résultats obtenus lors des essais (exemples 11 à 13) sont regroupés dans le tableau II.

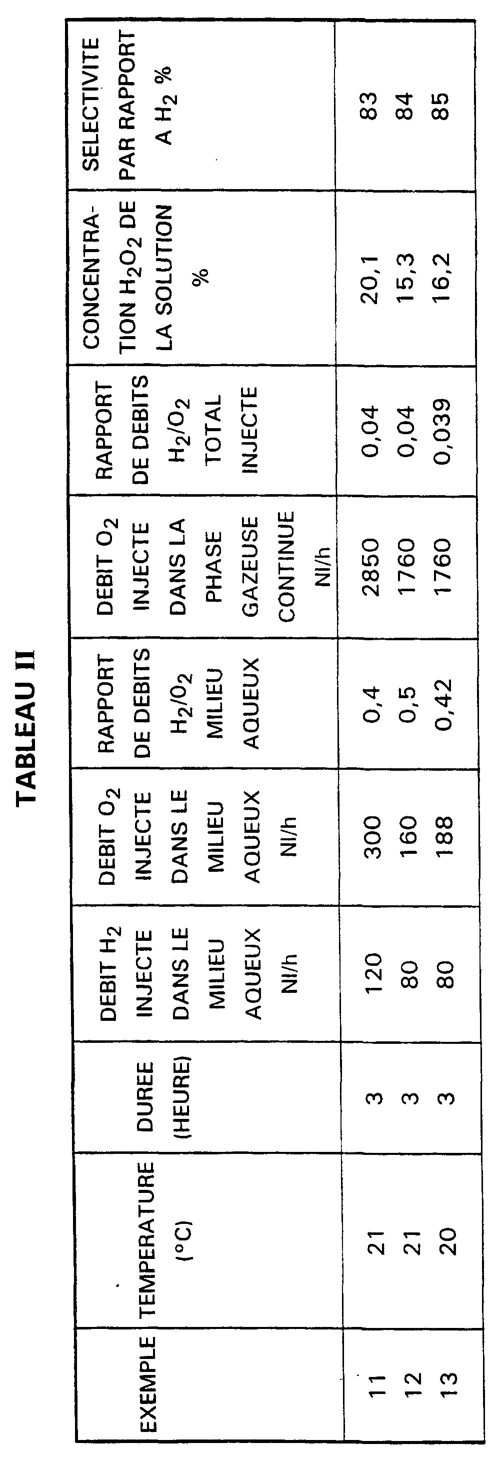

## Revendications

1. Procédé de préparation d'une solution aqueuse de peroxyde d'hydrogène dans un réacteur agité, directement à partir d'hydrogène et d'oxygène **caractérisé en ce que** l'on injecte, sous forme de petites bulles, dans la partie inférieure du milieu réactionnel aqueux, rendu acide par l'addition d'un acide minéral et comprenant un catalyseur à l'état dispersé, de l'hydrogène et de l'oxygène avec des débits tels que le rapport des débits molaires hydrogène sur oxygène soit supérieur à 0,0416, et que l'on introduit dans la phase gazeuse continue et/ou dans la partie supérieure du milieu réactionnel aqueux, de l'oxygène en quantité telle que le rapport molaire d'hydrogène sur oxygène dans la phase gazeuse continué soit inférieur à 0,0416.

2. Procédé selon la revendication 1 **caractérisé en ce que** les injections d'hydrogène et d'oxygène sous forme de petites bulles, dans la partie inférieure du milieu réactionnel aqueux sont situées au fond du réacteur agité.

3. Procédé selon la revendication 1 ou 2 **caractérisé en ce que** les arrivées d'hydrogène et d'oxygène dans la partie inférieure du milieu réactionnel aqueux sont contiguës.

4. Procédé selon l'une quelconque des revendications 1 à 3 **caractérisé en ce que** le milieu réactionnel contient des stabilisants du peroxyde d'hydrogène.

5. Procédé selon l'une quelconque des revendications 1 à 4 **caractérisé en ce que** le milieu réactionnel contient des halogénures.

6. Procédé selon la revendication 5 **caractérisé en ce que** l'halogénure est le bromure.

7. Procédé selon la revendication 6 **caractérisé en ce que** le bromure est utilisé en combinaison avec le brome à l'état libre.

8. Procédé selon l'une quelconque des revendications 1 à 7 **caractérisé en ce que** le catalyseur contient du palladium.

9. Procédé selon la revendication 8 **caractérisé en ce que** le catalyseur contient du platine.

10. Procédé selon la revendication 8 ou 9 **caractérisé en ce que** le catalyseur est supporté.

11. Procédé selon la revendication 10 **caractérisé en ce que** le support est choisi parmi la silice, l'alumine et les silice-alumine.

12. Procédé selon l'une quelconque des revendications 1 à 11 **caractérisé en ce que** l'oxygène introduit dans la phase gazeuse continue et/ou dans la partie supérieure du milieu réactionnel aqueux contient de l'hydrogène.

13. Procédé selon l'une quelconque des revendications 1 à 12 **caractérisé en ce que** l'oxygène injecté, sous forme de petites bulles, dans la partie inférieure du milieu réactionnel aqueux contient de l'hydrogène.

14. Dispositif pour la préparation d'une solution aqueuse de peroxyde d'hydrogène directement à partir d'hydrogène et d'oxygène, comprenant un réacteur agité alimenté en continu ou discontinu en solution de travail **caractérisé en ce que** le réacteur est muni - d'une ou plusieurs arrivée(s) d'hydrogène gazeux, sous forme de petites bulles, dans la partie inférieure du milieu réactionnel aqueux - d'une ou plusieurs arrivée(s) d'oxygène gazeux, contenant éventuellement de l'hydrogène, sous forme de petites bulles, dans la partie inférieure du milieu réactionnel aqueux, - d'un régulateur de pression permettant de maintenir constante la pression régnant à l'intérieur du réacteur en évacuant l'excès des réactifs gazeux non consommés et - d'une ou plusieurs arrivée(s) d'oxygène gazeux, contenant éventuellement de l'hydrogène, dans la phase gazeuse continue et/ou dans la partie supérieure du milieu réactionnel aqueux, asservie(s) par un analyseur du flux gazeux sortant du réacteur de façon à ce que le rapport molaire hydrogène/oxygène dans la phase gazeuse continue soit inférieur à 0,0416.

15. Dispositif selon la revendication 14 **caractérisé en ce que** le réacteur est muni d'une sortie pour l'extraction de la solution aqueuse de peroxyde d'hydrogène.

16. Dispositif selon la revendication 14 ou 15 **caractérisé en ce que** le flux gazeux sortant du réacteur est réinjecté dans le circuit alimentant la partie inférieure du milieu réactionnel aqueux en oxygène.

17. Dispositif selon la revendication 14 ou 15 **caractérisé en ce que** le flux gazeux sortant du réacteur est réinjecté, après éventuel ajustement par ajout d'oxygène, et éventuellement par élimination d'hydrogène, dans le circuit alimentant en oxygène la phase gazeuse continue et/ou la partie supérieure du milieu réactionnel aqueux.

18. Dispositif selon l'une quelconque des revendications 14 à 17 **caractérisé en ce qu'**au moins une arrivée d'hydrogène et au moins une arrivée d'oxygène, sous forme de petites bulles, sont situées au fond du réacteur agité.

19. Dispositif selon l'une des revendications 14 à 18 **caractérisé en ce que** les arrivées d'oxygène et d'hydrogène dans la partie inférieure du milieu réactionnel aqueux sont contiguës.

20. Dispositif selon l'une quelconque des revendications 14 à 19 **caractérisé en ce** l'agitation du réacteur est assurée par un ou plusieurs mobiles ou turbines indépendants.

21. Dispositif selon la revendication 20 **caractérisé en ce que** les turbines sont des turbines flasquées.

22. Dispositif selon la revendication 20 **caractérisé en ce que** les turbines sont des turbines autoaspirantes.

23. Dispositif selon l'une quelconque des revendications 14 à 22 **caractérisé en ce que** le réacteur agité est muni d'un échangeur thermique.

24. Dispositif selon la revendication 23 **caractérisé en ce que** l'échangeur est un faisceau tubulaire vertical ou des spirales enroulées ou un faisceau de plaques verticales disposées radialement.

25. Dispositif selon l'une quelconque des revendications 14 à 24 **caractérisé en ce que** toutes les petites bulles dans le milieu réactionnel aqueux remontent sous le seul effet de la gravité, à l'interface milieu aqueux/phase gazeuse continue lors de l'arrêt de l'agitation.

## Claims

1. Process for the preparation of an aqueous hydrogen peroxide solution in a stirred reactor directly from hydrogen and oxygen, **characterized in that** hydrogen and oxygen are injected, in the form of small bubbles, into the lower part of the aqueous reaction medium, which has been rendered acidic by the addition of a mineral acid and which comprises a catalyst in the dispersed state, with flow rates such that the ratio of the hydrogen molar flow rate to the oxygen molar flow rate is greater than 0.0416 and **in that** oxygen is introduced into the continuous gas phase and/or into the upper part of the aqueous reaction medium in an amount such that the molar ratio of hydrogen to oxygen in the continuous gas phase is less than 0.0416.

2. Process according to Claim 1, **characterized in that** the injections of hydrogen and of oxygen in the form of small bubbles into the lower part of the aqueous reaction medium are situated at the bottom of the stirred reactor.

3. Process according to Claim 1 or 2, **characterized in that** the inlets for hydrogen and oxygen into the lower part of the aqueous reaction medium are contiguous.

4. Process according to any one of Claims 1 to 3, **characterized in that** the reaction medium comprises stabilizers for hydrogen peroxide.

5. Process according to any one of Claims 1 to 4, **characterized in that** the reaction medium comprises halides.

6. Process according to Claim 5, **characterized in that** the halide is the bromide.

7. Process according to Claim 6, **characterized in that** the bromide is used in combination with bromine in the free state.

8. Process according to any one of Claims 1 to 7, **characterized in that** the catalyst comprises palladium.

9. Process according to Claim 8, **characterized in that** the catalyst comprises platinum.

10. Process according to Claim 8 or 9, **characterized in that** the catalyst is supported.

11. Process according to Claim 10, **characterized in that** the support is chosen from silica, alumina and silica-aluminas.

12. Process according to any one of Claims 1 to 11, **characterized in that** the oxygen introduced into the continuous gas phase and/or into the upper part of the aqueous reaction medium comprises hydrogen.

13. Process according to any one of Claims 1 to 12, **characterized in that** the oxygen injected, in the form of small bubbles, into the lower part of the aqueous reaction medium comprises hydrogen.

14. Device for the preparation of an aqueous hydrogen peroxide solution directly from hydrogen and oxygen comprising a stirred reactor fed continuously or non-continuously with working solution, **characterized in that** the reactor is equipped with one or more inlet(s) for gaseous hydrogen, in the form of small bubbles, into the lower part of the aqueous reaction medium; with one or more inlet(s) for gaseous oxygen optionally comprising hydrogen, in the form of small bubbles, into the lower part of the aqueous reaction medium; with a pressure regulator which makes it possible to keep the pressure prevailing inside the reactor constant by discharging excess unconsumed gaseous reactants; and with one or more inlet(s) for gaseous oxygen optionally comprising hydrogen into the continuous gas phase and/or into the upper part of the aqueous reaction medium, which is/are controlled by an analyser of the gas flow exiting from the reactor, so that the hydrogen/oxygen molar ratio in the continuous gas phase is less than 0.0416.

15. Device according to Claim 14, **characterized in that** the reactor is equipped with an outlet for the extraction of the aqueous hydrogen peroxide solution.

16. Device according to Claim 14 or 15, **characterized in that** the gas flow exiting from the reactor is reinjected into the circuit feeding the lower part of the aqueous reaction medium with oxygen.

17. Device according to Claim 14 or 15, **characterized in that** the gas flow exiting from the reactor is reinjected, after optional adjustment by addition of oxygen and optionally by removal of hydrogen, into the circuit feeding with oxygen the continuous gas phase and/or the upper part of the aqueous reaction medium.

18. Device according to any one of Claims 14 to 17, **characterized in that** at least one inlet for hydrogen and at least one inlet for oxygen, in the form of small bubbles, are situated at the bottom of the stirred reactor.

19. Device according to one of Claims 14 to 18, **characterized in that** the inlets for oxygen and hydrogen into the lower part of the aqueous reaction medium are contiguous.

20. Device according to any one of Claims 14 to 19, **characterized in that** the stirring of the reactor is provided by one or more independent impellers or turbines.

21. Device according to Claim 20, **characterized in that** the turbines are flanged turbines.

22. Device according to Claim 20, **characterized in that** the turbines are self-suction turbines.

23. Device according to any one of Claims 14 to 22, **characterized in that** the stirred reactor is equipped with a heat exchanger.

24. Device according to Claim 23, **characterized in that** the exchanger is a vertical tubular bundle or wound spirals or a bundle of vertical plates positioned radially.

25. Device according to any one of Claims 14 to 24, **characterized in that** all the small bubbles in the aqueous reaction medium rise solely under the effect of gravity to the aqueous medium/continuous gas phase interface when stirring is halted.

## Patentansprüche

1. Verfahren zur Herstellung einer wäßrigen Lösung von Wasserstoffperoxid direkt ausgehend von Wasserstoff und Sauerstoff in einem Reaktor, dessen Inhalt bewegt wird, **dadurch gekennzeichnet, daß** in den unteren Bereich des wäßrigen Reaktionsmediums, das durch den Zusatz einer anorganischen Säure angesäuert wurde und einen Katalysator in dispergierter Form enthält, in Form von kleinen Blasen Wasserstoff und Sauerstoff mit solchen Durchsätzen zugeführt wird, daß das Verhältnis des molaren Durchsatzes von Wasserstoff und Sauerstoff über 0,0416 liegt, und dadurch, daß in die kontinuierliche Gasphase und/oder in den oberen Bereich des wäßrigen Reaktionsmediums Sauerstoff in einer solchen Menge eingeleitet wird, daß das molare Verhältnis von Wasserstoff und Sauerstoff in der kontinuierlichen Gasphase unter 0,0416 liegt.

2. Verfahren nach Anspruch 1, **dadurch gekennzeichnet, daß** Wasserstoff und Sauerstoff in Form von kleinen Blasen im unteren Bereich des wäßrigen Reaktionsmediums am Boden des Reaktors, dessen Inhalt bewegt wird, zugeführt werden.

3. Verfahren nach Anspruch 1 oder 2, **dadurch gekennzeichnet, daß** die Zuführungen für Wasserstoff und Sauerstoff im unteren Bereich des wäßrigen Reaktionsmediums nebeneinander angeordnet sind.

4. Verfahren nach einem der Ansprüche 1 bis 3, **dadurch gekennzeichnet, daß** das Reaktionsmedium Stabilisatoren für Wasserstoffperoxid enthält.

5. Verfahren nach einem der Ansprüche 1 bis 4, **dadurch gekennzeichnet, daß** das Reaktionsmedium Halogenide enthält.

6. Verfahren nach Anspruch 5, **dadurch gekennzeichnet, daß** das es sich bei dem Halogenid um Bromid handelt.

7. Verfahren nach Anspruch 6, **dadurch gekennzeichnet, daß** das Bromid in Kombination mit Brom in freiem Zustand verwendet wird.

8. Verfahren nach einem der Ansprüche 1 bis 7, **dadurch gekennzeichnet, daß** der Katalysator Palladium enthält.

9. Verfahren nach Anspruch 8, **dadurch gekennzeichnet, daß** der Katalysator Platin enthält.

10. Verfahren nach einem der Ansprüche 8 oder 9, **dadurch gekennzeichnet, daß** der Katalysator einen Träger aufweist.

11. Verfahren nach Anspruch 10, **dadurch gekennzeichnet, daß** der Träger unter Siliciumdioxid, Aluminiumoxid und Siliciumdioxid-Aluminium-oxid ausgewählt ist.

12. Verfahren nach einem der Ansprüche 1 bis 11, **dadurch gekennzeichnet, daß** der Sauerstoff, der in die kontinuierliche Gasphase und/oder den oberen Bereich des wäßrigen Reaktionsmediums eingeleitet wird, Wasserstoff enthält.

13. Verfahren nach einem der Ansprüche 1 bis 12, **dadurch gekennzeichnet, daß** der in Form von kleinen Blasen in den unteren Bereich des wäßrigen Reaktionsmediums eingeleitete Sauerstoff Wasserstoff enthält.

14. Vorrichtung zur Herstellung einer wäßrigen Lösung von Wasserstoffperoxid direkt ausgehend von Wasserstoff und Sauerstoff, die einen Reaktor umfaßt, dessen Inhalt bewegt wird und in den kontinuierlich oder diskontinuierlich eine Arbeitslösung zugeführt wird, **dadurch gekennzeichnet, daß** der Reaktor versehen ist: - im unteren Bereich des wäßrigen Reaktionsmediums mit einer oder mehreren Zuleitungen für gasformigen Wasserstoff in Form von Blasen, - im unteren Bereich des wäßrigen Reaktionsmediums mit einer oder mehreren Zuleitungen für gasförmigen Sauerstoff, der gegebenenfalls Wasserstoff enthält, in Form von Blasen, - mit einer Einrichtung zur Druckeinstellung, mit der der Druck im Innern des Reaktors konstant gehalten werden kann, indem die nicht umgesetzten, überschüssigen reaktiven Gase entfernt werden, und - in der kontinuierlichen Gasphase und/oder dem oberen Bereich des wäßrigen Reaktionsmediums mit einer oder mehreren Zuleitungen für gasförmigen Sauerstoff, der gegebenenfalls Wasserstoff enthält, die mit einem Analysator für den Gasfluß, der den Reaktor verläßt, so überwacht wird/werden, daß das molare Verhältnis Wasserstoff/Sauerstoff in der kontinuierlichen Gasphase unter 0,0416 liegt.

15. Vorrichtung nach Anspruch 14, **dadurch gekennzeichnet, daß** der Reaktor mit einem Auslaß zur Entnahme der wäßrigen Wasserstoffperoxidlösung versehen ist.

16. Vorrichtung nach Anspruch 14 oder 15, **dadurch gekennzeichnet, daß** der Gasfluß, der den Reaktor verläßt, wieder in den Kreislauf rückgeführt wird, der den unteren Bereich des wäßrigen Reaktionsmediums mit Sauerstoff speist.

17. Vorrichtung nach Anspruch 14 oder 15, **dadurch gekennzeichnet, daß** der Gasfluß, der den Reaktor verläßt, wieder in den Kreislauf rückgeführt wird, der die kontinuierliche Gasphase und/oder den oberen Bereich des wäßrigen Reaktionsmediums mit Sauerstoff speist, nachdem er gegebenenfalls durch Zusatz von Sauerstoff und gegebenenfalls durch Entnahme von Wasserstoff angepasst wurde.

18. Vorrichtung nach einem der Ansprüche 14 bis 17, **dadurch gekennzeichnet, daß** mindestens eine Zuleitung für Wasserstoff und mindestens eine Zuleitung für Sauerstoff in Form von kleinen Blasen am Boden des Reaktors, dessen Inhalt bewegt wird, angeordnet sind.

19. Vorrichtung nach einem der Ansprüche 14 bis 18, **dadurch gekennzeichnet, daß** die Zuleitungen für Wasserstoff und Sauerstoff im unteren Bereich des wäßrigen Reaktionsmediums nebeneinander angeordnet sind.

20. Vorrichtung nach einem der Ansprüche 14 bis 19, **dadurch gekennzeichnet, daß** der Reaktor mit einem oder mehreren unabhängigen beweglichen Teilen oder Turbinen bewegt wird.

21. Vorrichtung nach Anspruch 20, **dadurch gekennzeichnet, daß** es sich bei den Turbinen um Schaufelturbinen handelt.

22. Vorrichtung nach Anspruch 20, **dadurch gekennzeichnet, daß** es sich bei den Turbinen um selbstansaugende Turbinen handelt.

23. Vorrichtung nach einem der Ansprüche 14 bis 22, **dadurch gekennzeichnet, daß** der Reaktor, dessen Inhalt bewegt wird, mit einem Wärmetauscher versehen ist.

24. Vorrichtung nach Anspruch 23, **dadurch gekennzeichnet, daß** es sich bei dem Austauscher um ein Bündel von vertikalen Rohren oder gerollte Spiralen oder ein Bündel von radial angeordneten vertikalen Platten handelt.

25. Vorrichtung nach einem der Ansprüche 14 bis 24, **dadurch gekennzeichnet, daß** die kleinen Blasen in dem wäßrigen Reaktionsmedium lediglich durch Auftrieb an die Grenzfläche von wäßriger Phase und kontinuierlicher Gasphase aufsteigen, wenn die Bewegung eingestellt wird.
